# EUROPÄISCHE PATENTSCHRIFT

(11) **EP 1 776 805 B1**
(45) Veröffentlichungstag und Bekanntmachung des Hinweises auf die Patenterteilung: **25.11.2009**
(21) Anmeldenummer: 05756826.3
(22) Anmeldetag: 29.06.2005
(51) Int. Cl.: H04L 12/40

(54) **FLEXRAY-KOMMUNIKATIONSBAUSTEIN**
FLEXRAY- COMMUNICATION COMPONENT
MODULE DE COMMUNICATION FLEXRAY

(30) Priorität: 05.08.2004 DE 102004038212
(43) Veröffentlichungstag der Anmeldung: 25.04.2007
(73) Patentinhaber: ROBERT BOSCH GMBH, 70442 Stuttgart (DE)
(72) Erfinder: HARTWICH, Florian, 72762 Reutlingen (DE); HORST, Christian, 72144 Dusslingen (DE); BAILER, Franz, 72770 Reutlingen (DE)
(86) Internationale Anmeldenummer: PCT/EP2005/053083
(87) Internationale Veröffentlichungsnummer: WO 2006/015913

(56) Entgegenhaltungen:
- EP-A- 1 179 920
- WO-A-03/053010
- BERWANGER J ET AL: "FLEXRAY - THE COMMUNICATION SYSTEM FOR ADVANCED AUTOMOTIVE CONTROL SYSTEMS" SAE TECHNICAL PAPER SERIES, SOCIETY OF AUTOMOTIVE ENGINEERS, WARRENDALE, PA, US, Bd. 2001-1-676, 5. März 2001 (2001-03-05), XP009023349 ISSN: 0148-7191
- GO: "FlexRay fuer verteilte Anwendungen im Fahrzeug" ELEKTRONIK AUTOMOTIVE, Mai 2001 (2001-05), Seiten 40-43, XP002216067

## Beschreibung

### Stand der Technik

Die Erfindung betrifft einen FlexRay-Kommunikationsbaustein zur Kopplung einer FlexRay-Kommunikationsverbindung mit einem, dem FlexRay-Kommunikationsbaustein zugeordneten Teilnehmer in einem FlexRay-Netzwerk, über welches Botschaften über**tragen werden.**

Die Vernetzung von Steuergeräten, Sensorik und Aktuatorik mit Hilfe eines Kommunikationssystems und eines Bussystems, also einer Kommunikationsverbindung hat in den letzten Jahren beim Bau von modernen Kraftfahrzeugen oder auch im Maschinenbau, insbesondere im Werkzeugmaschinenbereich als auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über ein Bussystem, also ein Kommunikationssystem statt Der Kommunikationsverkehr auf dem Bussystem, Zugriffs- und Empfangsmechanismen sowie Fehlerbehandlung werden über ein Protokoll geregelt. Ein bekanntes Protokoll hierzu ist das FlexRay-Protokoll, wobei im Augenblick die FlexRay-Protokollspezifikation v2.0 zugrunde liegt. Der FlexRay ist ein schnelles, deterministisches und fehlertolerantes Bussystem, insbesondere für den Einsatz in einem Kraftfahrzeug. Das FlexRay-Protokoll arbeitet nach dem Verfahren des Time Division Multiple Access (TDMA), wobei den Komponenten also Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen unterteilt FlexRay den Zyklus in einen statischen und einen dynamischen Teil. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit, sogenannte Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über zwei physikalisch getrennte Leitungen mit einer Datenrate von je maximal 10 MByte/s. Die beiden Kanäle entsprechen dabei der physikalischen Schicht, insbesondere des OSI (Open System Architecture) schichtenmodells. Diese dienen nun hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren benötigen die verteilten Komponenten im Kommunikationsnetzwerk, also die Teilnehmer, eine gemeinsame Zeitbasis, die sogenannte globale Zeit. Für die Unsynchronisation werden Synchronisationsnachrichten im statischen Teil des Zyklus übertragen, wobei mit Hilfe eines speziellen Algorithmus entsprechend der FlexRay-Spezifikation die lokale Uhrzeit einer Komponente so korrigiert wird, dass alle lokalen Uhren zu einer globalen Uhr synchron laufen.

Ein FlexRay-Netzknoten oder FlexRay-Teilnehmer oder Host enthält einen Teilnehmerprozessor, also den Host-Prozessor einen FlexRay-Controller oder Kommunikationscontroller sowie bei einer Busüberwachung einen Busguardian. Dabei liefert und verarbeitet der Host-Prozessor, also der Teilnehmerprozessor die Daten, die über den FlexRay-Kommunikationscontroller übertragen werden. Für die Kommunikation in einem FlexRay-Netzwerk können Botschaften bzw. Botschaftsobjekte mit z.B. bis zu 254 Datenbytes konfiguriert werden. Dies ist in der SAF-Schrift "FlexRay - The Communication System for Advanced Automotive Control Systems" Bd. 2001-1-676, 05.03.01, XP009023349, ISSN 01487191 dargestellt.Dieser Stand der Technik zeigt einen Kommunikationsbaustein in Form eines FlexRay-Moduls, in welchem über eine "Transmit Unit" und eine "Receive Unit"ein FlexRay-Teilnehmer mit einer Botschaftsspeicherschnittstelle (Message Buffer Interface) verbunden wird.

Aufgabe ist es nun, einen FlexRey-Kornmunikationsbaustein zur Verfügung zu stellen, der in optimaler Weise die Kommunikation in einem FlexRay-Netzwerk unterstützt und insbesondere die Datenintegrität sicherstellt.

### Vorteile der Erfindung

Diese Aufgabe wird gelöst durch einen FlexRay-Kommunikationsbaustein zur Kopplung einer FlexRay-Kommunikationsverbindung als physikalische Schicht mit einem, dem FlexRay-Kommunikationsbaustein zugeordneten Teilnehmer in einem FlexRay-Netzwerk, über welches Botschaften übertragen werden. Dabei enthält der FlexRay-Kommunikationsbaustein vorteilhafter Weise eine erste Anordnung zur Speicherung wenigstens eines Teils der übertragenen Botschaften und eine zweite Anordnung zur Verbindung der ersten Anordnung mit dem Teilnehmer, sowie eine dritte Anordnung zur Verbindung der FlexRay-Kommunikationsverbindung, wobei die zweite Anordnung einen Eingangspufferspeicher und einen Ausgangspufferspeicher enthält.

Dabei enthält die erste Anordnung vorteilhafter Weise einen Botschaftsverwalter, also Message Handler und einen Botschaftsspeicher, wobei der Botschaftsverwalter die Steuerung bezüglich der Datenpfade der ersten und zweiten Anordnung bezogen auf einen Datenzugriff bezüglich des Botschaftsspeichers übernimmt. Dabei ist der Botschaftsspeicher der ersten Anordnung zweckmäßiger Weise in ein Kopfsegment und ein Datensegment aufgeteilt ist.

Vorteilhafter Weise enthält die zweite Anordnung zur Anbindung an den Host, also den FlexRay-Teilnehmer bzw. den Host-Prozessor einen Eingangspufferspeicher und einen Ausgangspufferspeicher, wobei entweder der Eingangspufferspeicher oder der Ausgangspufferspeicher oder am besten beide Speicher in einer bevorzugten Ausführungsform jeweils in einen Teilpufferspeicher und einen Schattenspeicher aufgeteilt sind, die jeweils wechselweise nur gelesen und/oder beschrieben werden, wodurch die Datenintegrität gewährleistet wird. Das wechselweise Lesen bzw. Beschreiben des jeweiligen Teilpufferspeichers und zugehörigen Schattenspeichers kann vorteilhafterweise durch Vertauschen des jeweiligen Zugriffs erzielt werden oder durch Vertauschen des Speicherinhalts.

Dabei ist es vorteilhaft, wenn jeder Teilpufferspeicher und jeder Schattenspeicher derart ausgelegt ist, dass je ein Datenbereich und/oder ein Kopfbereich zweier FlexRay-Botschaften speicherbar ist.

Zur problemloseren Anpassung an unterschiedliche Teilnehmer oder Hosts enthält die zweite Anordnung einen Schnittstellenbaustein, der aus einem teilnehmerspezifischen Teilbaustein und einem teilnehmerunabhängigen Teilbaustein besteht, so dass zur Teinehmeranpassung lediglich der teilnehmerspezifische Teilbaustein geändert werden muss und so insgesamt die Flexibilität des FlexRay-Kommunikationsbausteins erhöht wird. Dabei können die Teilbausteine auch innnerhalb des einen Schnittstellenbausteins jeweils in Software, also jeder Teilbaustein als Softwarefunktion realisiert werden.

Entsprechend der redundanten Übertragungswege bei FlexRay enthält die dritte Anordnung vorteilhafter Weise einen ersten Schnittstellenbaustein und einen zweiten Schnittstellenbaustein und ist ihrerseits in zwei Datenpfade mit jeweils zwei Datenrichtungen aufgeteilt. Zweckmäßiger Weise enthält die dritte Anordnung auch einen ersten und einen zweiten Pufferspeicher, um den beiden Datenpfaden und den jeweils zwei Datenrichtumgen Rechnung zu tragen. Dabei sind auch hier der erste und zweite Pufferspeicher derart ausgelegt, dass wenigstens je ein Datenbereich zweier FlexRay-Botschaften speicherbar ist. Vorteilhafter Weise enthält jeder Schnittstellenbaustein der dritten Anordnung ein Schieberegister und eine FlexRay-Protokoll-Zustandsmaschine.

Durch den erfindungsgemäßen FlexRay-Kommunikationsbaustein kann die FlexRay-Protokollspezifikation, insbesondere v2.0, vollständig unterstützt werden und es sind damit z.B. bis zu 64 Botschaften bzw. Botschaftsobjekte konfigurierbar. Dabei ergibt sich ein flexibel konfigurierbarer Botschaftsspeicher für die Speicherung einer unterschiedlichen Anzahl von Botschaftsobjekten abhängig von der Größe des jeweiligen Datenfeldes bzw. Datenbereiches der Botschaft. Somit sind also vorteilhafter Weise Botschaften- oder Botschaftsobjekte zu konfigurieren, die unterschiedlich lange Datenfelder besitzen. Der Botschaftsspeicher ist dabei vorteilhafter Weise als FIFO (first in-first out) ausgebildet, so dass sich ein konfigurierbarer Empfangs-FIFO ergibt. Jede Botschaft bzw. jedes Botschaftsobjekt im Speicher kann als Empfangsspeicherobjekt (Receive-Buffer), Sendespeicherobjekt (Transmit-Buffer) oder als Teil des konfigurierbaren Empfangs-FIFOs konfiguriert werden. Ebenso ist eine Akzeptanzfilterung auf Frame-ID, Channel-ID und Cycle-Counter im FlexRay-Netzwerk möglich.Zweckmäßiger Weise wird somit das Netzwerkmanagement unterstützt. Vorteilhafter Weise sind außerdem maskierbare Modulinterrupts vorgesehen.
Weitere Vorteile und vorteilhafte Ausgestaltungen ergeben sich aus den Merkmalen der Ansprüche ebenso wie aus der Beschreibung.

### Zeichnung

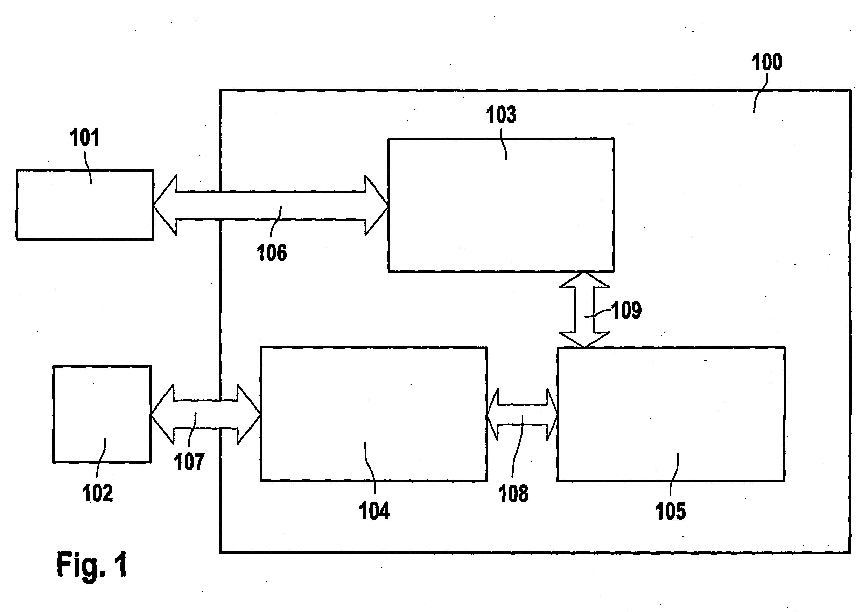

Die Erfindung wird anhand der nachfolgenden Figuren der Zeichnung näher erläutert.
Dabei zeigt Figur 1 in schematischer Darstellung den Kommunikationsbaustein und dessen Anbindung an die physikalische Schicht, also die Kommunikationsverbindung und den Kommunikations- oder Host-Teilnehmer.
Figur 2 stellt in einer speziellen Ausführungsform Kommunikationsbaustein aus Figur 1 sowie dessen Anbindung detaillierter dar.
In Figur 3 ist die Struktur des Botschaftsspeichers dargestellt.
Figur 4 bis 6 beschreibt schematisch die Architektur und den Prozess des Datenzugriffs in Richtung vom Teilnehmer zum Botschaftsspeicher.
Figur 7 bis 9 beschreibt schematisch Architektur und Prozess des Datenzugriffs in Richtung vom Botschaftsspeicher zum Teilnehmer.
In Figur 10 ist der Botschaftsverwalter und die darin enthaltenen Finit-State-Maschinen schematisch dargestellt.
Figur 11 zeigt noch einmal schematisch die Bauteile des Kommunikatinsbausteins sowie den Teilnehmer und die entsprechenden, durch den Botschaftsverwalter gesteuerten Datenpfade.
Figur 12 beschreibt die Zugriffsverteilung bezogen auf die Datenpfade in Figur 11.

Die Erfindung wird nachfolgend anhand der Ausführungsbeispiele näher erläutert.

### Ausführungsbeispiele

Figur 1 zeigt schematisch einen FlexRay-Kommunikationsbaustein 100 zur Anbindung eines Teilnehmers oder Hosts 102 an eine FlexRay-Kommunikationsverbindung 101, also die physikalische Schicht des FlexRay. Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet. Ebenso ist zwischen Teilnehmer 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay-Botschaften in bzw. aus der ersten Anordnung 105 mit Gewährleistung der Datenintegrität bei optimaler Geschwindigkeit erzielbar ist.

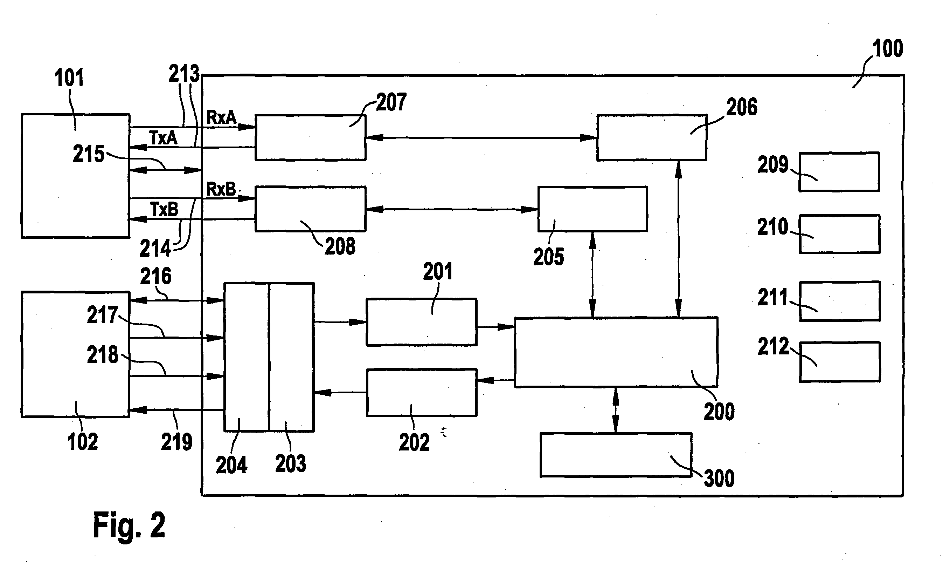

In Figur 2 ist dieser Kommunikationsbaustein 100 in einer bevorzugten Ausführungsform noch einmal detaillierter dargestellt. Ebenso detaillierter dargestellt sind die jeweiligen Verbindungen 106 bis 109. Die zweite Anordnung 104 enthält dabei einen Eingangspufferspeicher oder Eingabepufferspeicher 201 (Input Buffer IBF), einen Ausgangspufferspeicher oder Ausgabepufferspeicher 202 ( Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer mit dem FlexRay-Kommunikationsbaustein. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang. Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface, an das sich über entsprechende teilnehmerspezifische Teilbausteine, also Customer CPU Interfaces CIF eine große Anzahl von unterschiedlichen kundenspezifischen Host CPU's anschliessen lassen. Dadurch muss abhängig vom Teilnehmer nur der Teilbaustein 204 variiert werden, was einen deutlich geringeren Aufwand bedeutet.

Der Eingabepufferspeicher oder Eingangspufferspeicher 201 und der Ausgangspufferspeicher oder Ausgabepufferspeicher 202 können in einem Speicherbaustein oder aber in getrennten Speicherbausteinen ausgebildet sein. Dabei dient der Eingabepufferspeicher 201 für die Zwischenspeicherung von Botschaften für die Übertragung zum Botschaftsspeicher 200. Dabei ist der Eingabepufferbaustein vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 200 beschleunigen lässt. Ebenso dient der Ausgabepufferspeicher oder Ausgangspufferspeicher (Output-Buffer OBF) für die Zwischenspeicherung von Botschaften für die Übertragung vom Botschaftsspeicher 200 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaftsspeicher 200 beschleunigen lässt. Diese zweite Anordnung 104 bestehend aus den Blöcken 201 bis 204 ist mit der ersten Anordnung 105 wie dargestellt verbunden.

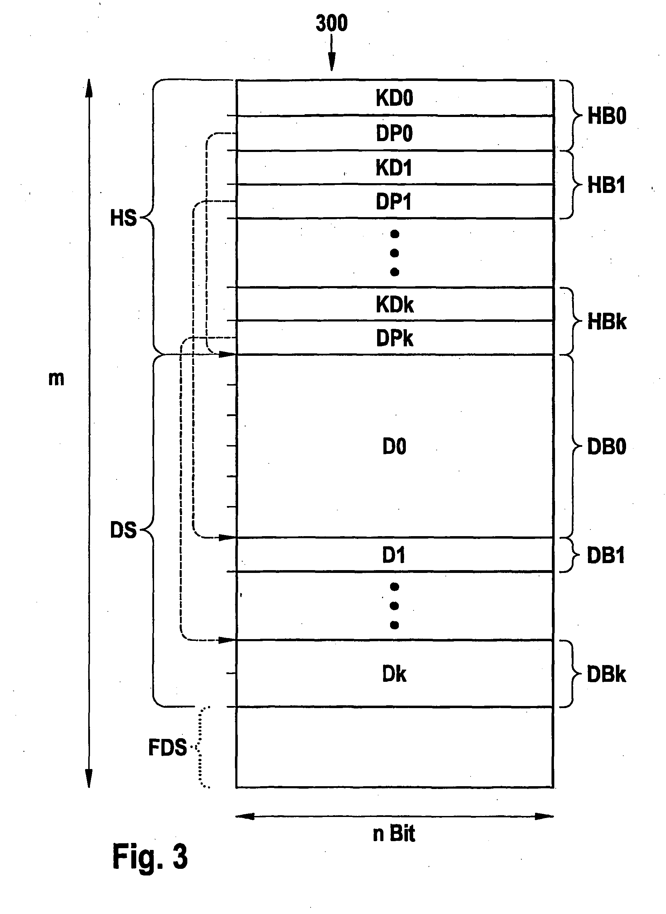

Die Anordnung 105 besteht aus einem Botschaftsverwalter 200 (Message Handler MHD) und einem Botschaftsspeicher 300 (Message RAM). Der Botschaftsverwalter kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A, RxA und TxA für Empfangen (RxA) und Senden (TxA) sowie für Kanal B, RxB und TxB dargestellt sind. Mit Verbindung 215 ist ein optionaler bidirektionaler Steuereingang bezeichnet Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAM's: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt.

Mit Block 210 ist die allgemeine Systemsteuerung (System Universal Control SUC) dargestellt, durch welche die Operationsmodi des FlexRay-Kommunikationscontrollers kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlermanagement (Network- und Error Management NEM), wie in der FlexRay-Protokollspezifikation v2.0 beschrieben. Block 212 schließlich zeigt die Unterbrechungssteuerung (Interrupt Control INT), welche die Status- und Fehlerunterbrechungsflaggen (status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafls-RAM-Speicher (Message RAM), welcher z.B. bis zu maximal 64 Botschaftsobjekten speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

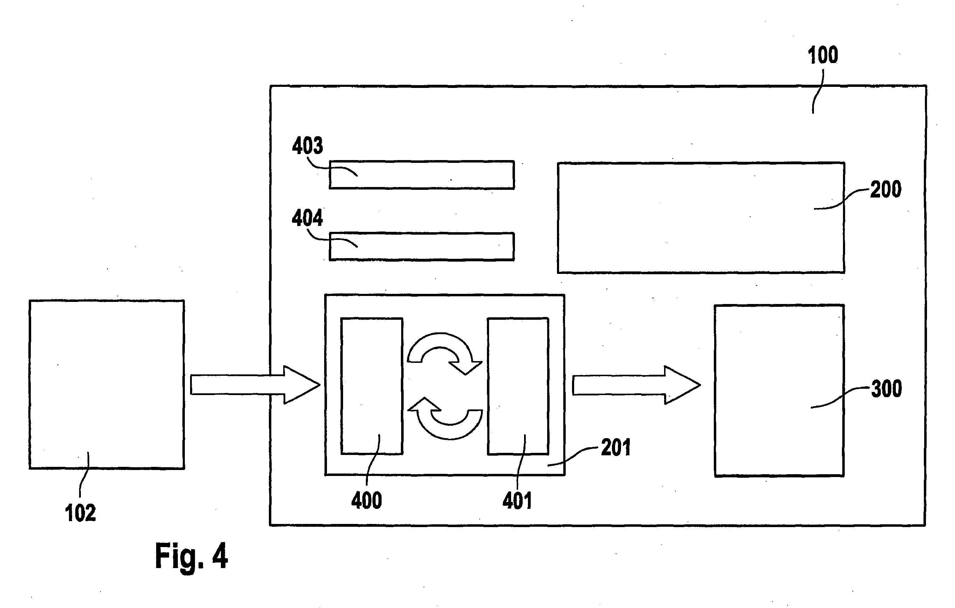

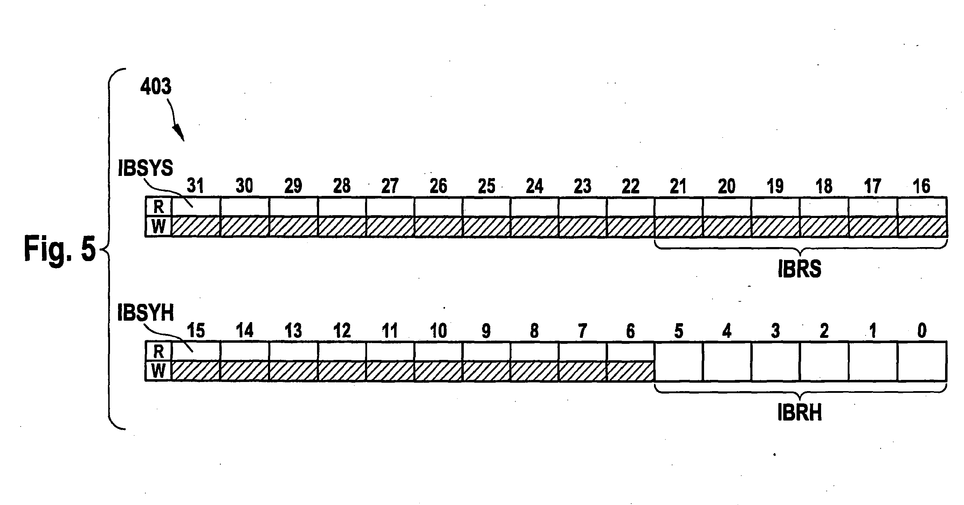

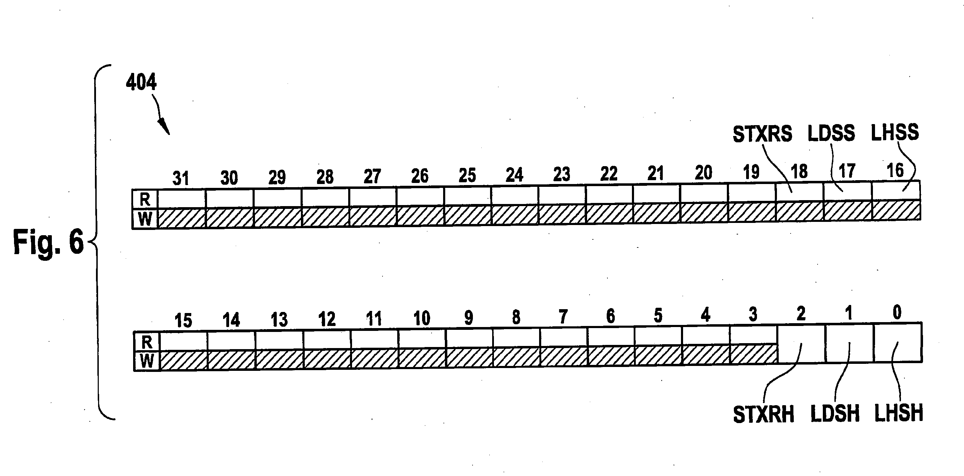

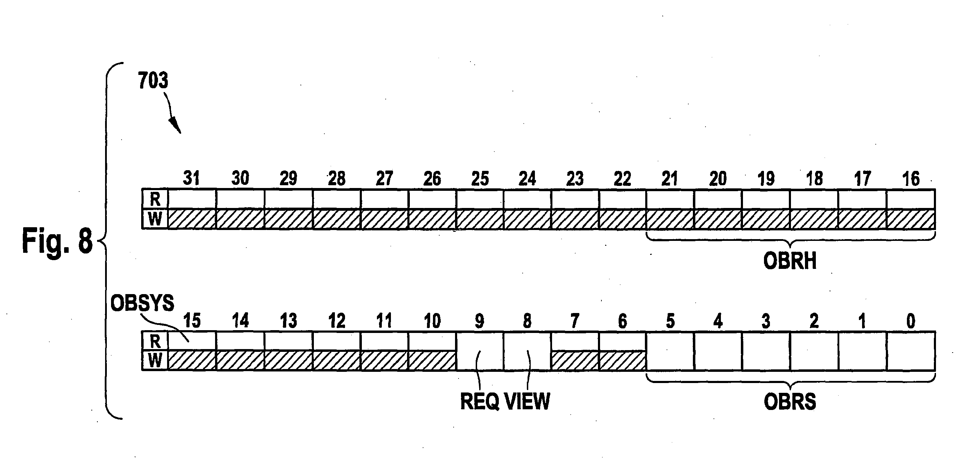

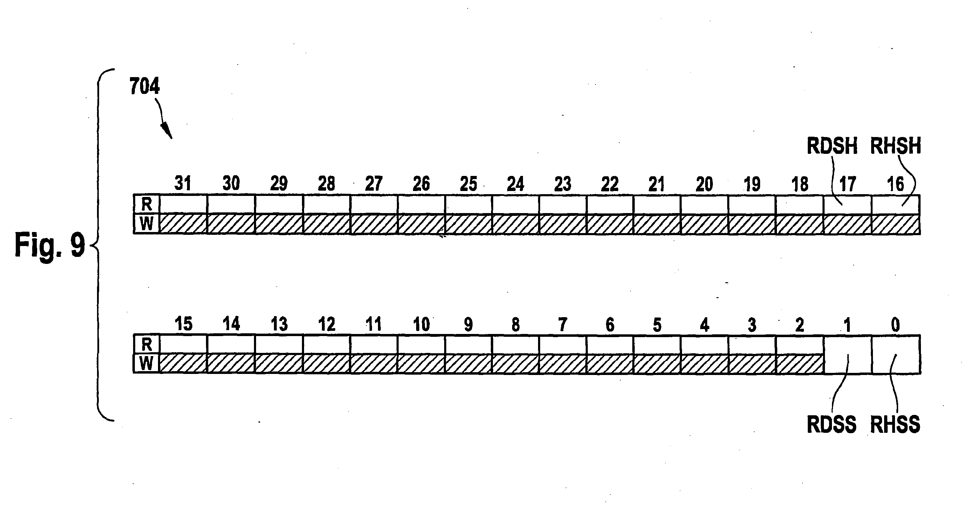

Eine externe CPU, also ein externer Prozessor der Teilnehmerprozessor 102 kann über die Teilnehmerschnittstelle, mit dem teilnehmerspezifischen Teil 204 direkt auf die Register des FlexRay-Kommunikationsbausteins zugreifen. Dabei wird eine Vielzahl von Registern verwendet. Diese Register werden eingesetzt, um die FlexRay Protokoll Controller, also die Schnittstellenbausteine 207 und 208 den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network und Error Management Unit NEM) 211, den Unterbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener, erfindungsgemäßer FlexRay-Kommunikationsbaustein ermöglicht die einfache Umsetzung der FlexRay-Spezifikation v2.0, wodurch einfach ein ASIC oder ein Mikrocontroller mit entsprechender FlexRay-Funktionalität generiert werden kann.

In Figur 3 ist detailliert die Aufteilung des Botschaftsspeichers 300 beschrieben. Für die nach der FlexRay-Protokollspezifikation geforderte Funktionalität eines FlexRay-Kommunikationscontrollers wird ein Botschaftsspeicher für das Bereitstellen von zu sendenden Botschaften (Transmit Buffer) sowie das Abspeichern von fehlerfrei empfangenen Botschaften (Receive Buffer) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher Teil des FlexRay-Kommunikationsbausteins 100. Das nachfolgend beschriebene Verfahren sowie der entsprechende Botschaftsspeicher beschreiben die Speicherung von zu sendenden Botschaften sowie von empfangenen Botschaften, insbesondere unter Verwendung eines Random Access Memory (RAM), wobei es durch den erfindungsgemäßen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt. Im Folgenden nun soll diese variable Aufteilung eines insbesondere RAM-basierten Botschaftsspeichers für einen FlexRay Communication Controller näher beschrieben werden.

Zur Implementierung wird nun beispielhaft ein Botschaftsspeicher mit einer festgelegten Wortbreite von n Bit, beispielsweise 8,16,32 usw., sowie einer vorgegebenen Speichertiefe von m Worten vorgegeben (m,n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0,1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Daten entsprechen, die übertragen werden sollen, werden entsprechend in Datenbereichen DB (DB0, DB1, ..., DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist erfindungsgemäß abhängig von der Anzahl k der Botschaften sowie dem zweiten Datenumfang, also dem Umfang der eigentlichen Daten, einer Botschaft bzw. aller k Botschaften zusammen. Erfindungsgemäß wird nun den Konfigurationsdaten KD0, KD1 bis KDk der jeweiligen Botschaft ein Zeigerelement oder Datapointer DP0, DP1 bis DPk jeweils direkt zugeordnet. In der speziellen Ausgestaltung wird jedem Kopfbereich HB0, HB1 bis HBk eine feste Anzahl von Speicherworten, hier zwei, zugeordnet, so dass immer ein Konfigurationsdatum KD (KD0, KD1, ..., KDk) und ein Zeigerelement DP (DP0, DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschafttsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers zwischen Kopfsegment HS und Datensegment DS variabel und hängt von der Anzahl der Botschaften selbst sowie dem jeweiligen Datenumfang einer Botschaft und damit dem gesamten zweiten Datenumfang ab. Werden weniger Botschaften konfiguriert, wird das Kopfsegment kleiner und der frei werdende Bereich im Botschaftsspeicher kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KD0, KD1, ..., KDk) und die eigentlichen Daten D (D=, D1, ...,Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC(Cyclic redundancy check) oder auch Kennungen höherer Mächtigkeit wie ECC ( Error Code Correction) sind denkbar. Damit sind gegenüber einer festgelegten Aufteilung des Botschaftsspeichers folgende Vorteile gegeben:

Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaflsspeichers durch Anpassung der Speichertiefe des verwendeten Speichers an die Bedürfnisse der Applikation angepasst werden, ohne die sonstigen Funktionen des Communication Controllers zu ändern.

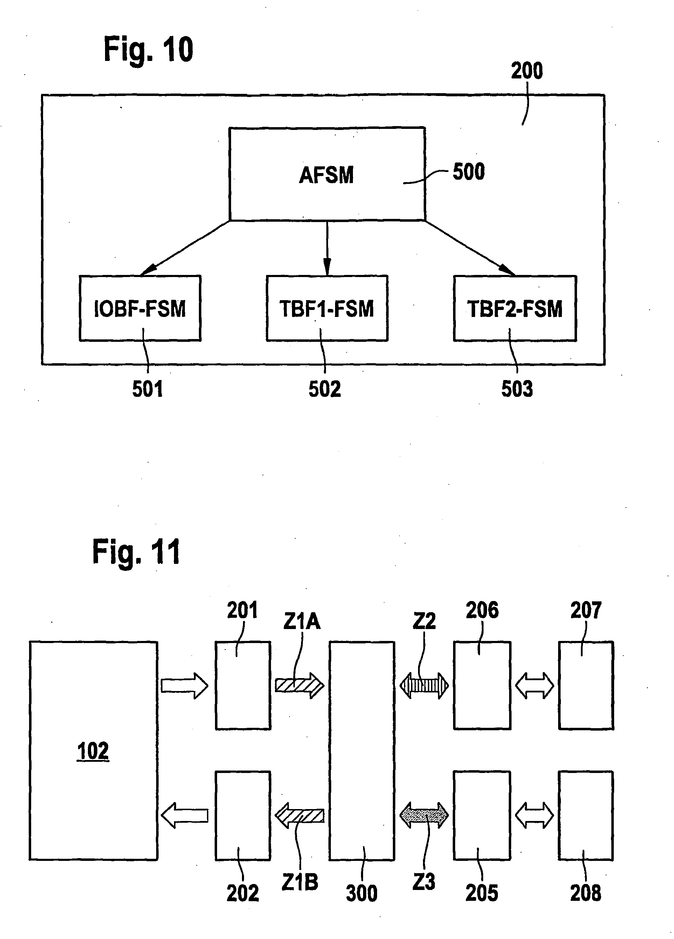

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202 näher beschrieben. Dabei ist es das Ziel, eine Entkopplung bezüglich der Datenübertragung derart herzustellen, dass die Datenintegrität sichergestellt werden kann und gleichzeitig eine hohe Übertragungsgeschwindigkeit gewährleistet ist. Die Steuerung dieser Vorgänge erfolgt über den Botschaftsverwalter 200, was später noch näher in den Figuren 10,11 und 12 beschrieben wird.

In den Figuren 4, 5 und 6 werden zunächst die Schreibzugriffe auf den Botschaftsspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über einen zwischengeschalteten Eingangspufferspeicher 201 (Input Buffer). Dieser Eingangspufferspeicher 201 ist nun geteilt bzw. gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden. Die Steuerung der Zugriffe erfolgt über das Eingangs-Anforderungsregister 403 und über das Eingangs-Maskierungsregister 404. Im Register 403 sind mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in 404.

Erfindungsgemäß erhalten nun beispielhaft die Bitstellen 0 bis 5,15,16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shaddow) eintragbar. Ebenso sind in Registerstelle 15 von 403 IBSYH und in Registerstelle 31 von 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle 2 von Register 404 ist mit STXRH (Set Transmission X Request Host) eine Startkennung eingeschrieben.

Im Weiteren wird nun der Ablauf des Schreibzugriffs auf den Botschaftsspeicher über den Eingangspuffer beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers oder nur die eigentlichen, zu übertragenden Daten D einer Botschaft für das Datensegment DS des Botschaftsspeichers oder beide schreiben. Welcher Teil einer Botschaft also Konfigurationsdaten und/oder die eigentlichen Daten übertragen werden soll, wird durch die speziellen Datenkennungen LHSH und LDSH im Eingangs-Markierungsregister 404 festgelegt Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teil des Pufferspeichers 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaftsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 1.

Wenn die Host-CPU 102 die Botschaftskennung, insbesondere die Nummer des Botschaftsobjekts im Botschaftsspeicher 300 in welches die Daten des Eingangspufferspeichers 201 transferiert werden sollen in die Bitstellen 0 bis 5 des Eingangs-Anforderungsregisters 403, also nach IBRH schreibt werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht. Dieses Bit IBSYS wird beispielsweise durch das Schreiben von IBRH also Bitstellen 0 bis 5 in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403 während eine Übertragung zwischen dem Schattenspeicher 401 und dem Botschaftsspeicher 300 läuft, also IBSYS=1 ist, so wird IBSYH im Eingangs-Anforderungsregister 403 gesetzt. Sobald der laufende Transfer also die laufende Übertragung abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher befindlichen Botschaftsobjekte bestehend aus Headerbereich HB und Datenbereich DB zu transferieren, vorrausgesetzt die Zugriffsgeschwindigkeit der Host-CPU 102 auf den Eingangspufferspeicher ist kleiner oder gleich der internen Datentransferrate des FlexRay-IP-Moduls also des Kommunikationsbausteins 100.

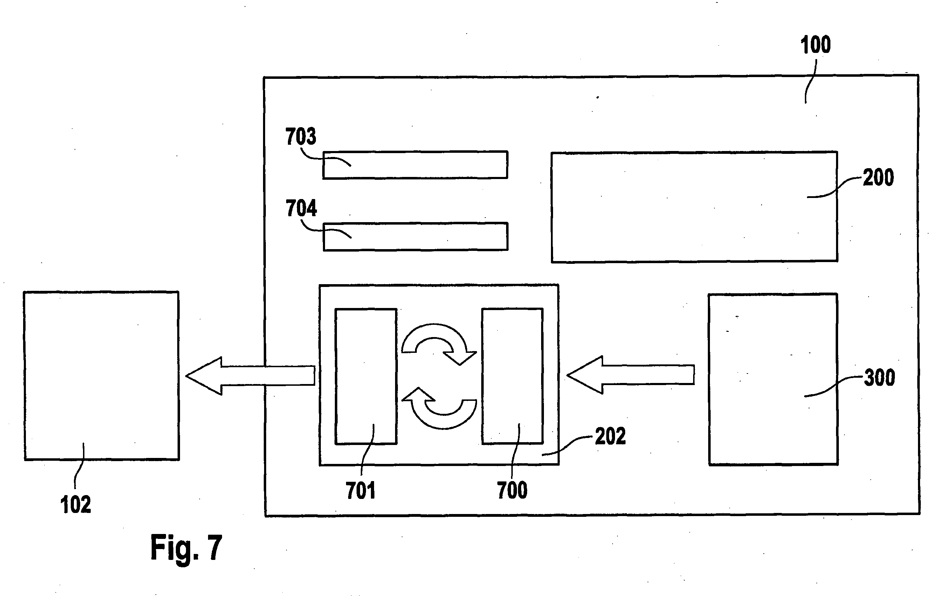

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 300 im Kommunikationsbaustein 100 untergebracht sein können, aber auch im Botschaftsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung nun in der Gegenrichtung vom Botschaftsspeicher zum Host gewährleistet werden. Die Steuerung der Zugriffe erfolgt über das Ausgangs-Anforderungsregister 703 und über das Eingangs-Maskierungsregister 704. Auch im Register 703 sind mit den Zahlen von 0 bis 31 die jeweiligen Bitstellen in 703 hier beispielhaft für eine Breite von 32 Bit dargestellt. Gleiches gilt für das Register 704 und die Bitstellen 0 bis 31 in 704.

Erfindungsgemäß erhalten nun beispielhaft die Bitstellen 0 bis 5, 8 und 9, 15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstelle 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist.

Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereich oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaftsspeicher zum Schattenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703 angezeigt. Um Kollisionen zu vermeiden ist es vorteilhaft, wenn das Bit REQ nur dann gesetzt werden kann, wenn OBSYS nicht gesetzt ist also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bistelle 8 des Registers 703. D.h. nach Abschluss der Übertragung wird das Bit OBSYS zurückgesetzt und durch Setzen des Bits VIEW im Ausgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher angeforderte Botschaftsobjekt also die entsprechende Botschaft aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über einen zwischengeschalteten Ausgangspufferspeicher 202. Dieser Ausgangspufferspeicher ist ebenso wie der Eingangspufferspeicher doppelt bzw. zweiteilig ausgelegt um einen kontinuierlichen Zugriff der Host-CPU 102 auf die Botschaftsobjekte die im Botschaftsspeicher 300 abgelegt sind zu gewährleisten. Auch hier werden die Vorteile der hohen Datenintegrität und der beschleunigten Übertragung erzielt.

Durch die Verwendung der beschriebenen Eingangs- und Ausgangspuffer wird sichergestellt, dass eine Host-CPU trotz der modulinternen Latenzzeiten unterbrechungsfrei auf den Botschaftsspeicher zugreifen kann.

Zur Sicherstellung dieser Datenintegrität wird die Datenübertragung, insbesondere die Weiterleitung im Kommunikationsbaustein 100 durch den Botschaftsverwalter 200 (Message Handler MHD) vorgenommen. Dazu ist in Figur 10 der Botschaftsverwalter 200 dargestellt. Der Botschaftsverwalter ist in seiner Funktionalität durch mehrere Zustandsmaschinen oder Zustandsautomaten, also endliche Automaten, sogenannte Finite-State-Maschinen (FSM) darstellbar. Dabei sind wenigstens drei Zustandsmaschinen und in einer besonderen Ausführungsform vier Finite-State-Maschinen vorgesehen. Eine erste Finit-State-Maschine ist die IOBF-FSM und mit 501 bezeichnet (Input/Output Buffer State Machine). Diese IOBF-FSM könnte auch je Übertragungsrichtung bezüglich des Eingangspufferspeichers oder des Ausgangspufferspeichers in zwei Finite-State-Maschinen aufgeteilt sein IBF-FSM (Input Buffer FSM) und OBF-FSM (Output Buffer FSM), womit maximal fünf Zustandsautomaten (IBF-FSM, OBF-FSM, TBP1-FSM, TBF2-FSM, AFSM) denkbar wären. Bevorzugt ist aber eine gemeinsame IOBF-FSM vorzusehen. Eine wenigstens zweite Finite-State-Maschine ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Maschine vorgesehen sein um beide Kanäle A und B zu bedienen oder aber wie in der bevorzugten Form eine Finit-State-Maschine TBF1-FSM mit 502 bezeichnet (Transient Buffer 1 (206, RAM A) State Machine) für Kanal A und für Kanal B eine TBF2-FSM mit 503 bezeichnet (Transient Buffer 2 (205, RAM B) State Machine).

Zur Steuerung des Zugriffs der drei Finite-State-Maschinen 501-503 im bevorzugten Ausführungsbeispiel dient eine Arbiter-Finite-State-Maschine, die sogenannte AFSM, die mit 500 bezeichnet ist. Die Daten (KD und/oder D) werden in einem durch ein Taktmittel, wie z.B. ein VCO (Voltage controlled oszillator), einen Schwingquarz usw. generierten oder aus diesem angepassten Takt im Kommunikationsbaustein übertragen. Der Takt T kann dabei im Baustein genereirt werden oder von außen, z.B. als Bustakt vorgegeben sein. Diese Arbiter-Finite-State-Maschine AFSM 500 gibt abwechselnd einer der drei Finit-State-Maschinen 501-503, insbesondere jeweils für eine Taktperiode T Zugriff auf den Botschaftsspeicher. D.h. die zur Verfügung stehende Zeit wird entsprechend den Zugriffsanforderungen der einzelnen Zustandsautomaten 501, 502,503 auf diese anfordernden Zustandsautomaten aufgeteilt. Erfolgt eine Zugriffsanforderung von nur einer Finite-State-Machine, so erhält diese 100% der Zugriffszeit, also alle Takte T. Erfolgt eine Zugriffsanforderung von zwei Zustandsautomaten, erhält jede Finite-State-Machine 50% der Zugriffszeit. Erfolgt schließlich eine Zugriffsanforderung von drei Zustandsautomaten so erhält jede der Finite-State-Maschinen 1/3 der Zugriffszeit. Dadurch wird die jeweils zur Verfügung stehende Bandbreite optimal genutzt.

Die erste Finite-State-Machine mit 501 bezeichnet, also IOBF-FSM führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine für Kanal A 502, also TBF1FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaftsspeicher, wobei bei Empfang das Botschaftsobjekt (Receive Buffer) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finit-State-Machine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaflsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaftsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist. Gleiches gilt für die Übertragung Z2 zwischen dem Botschaftsspeicher und dem Pufferspeicher 206. Diese Datenübertragung wird durch TBF1-FSM, also 502 die Zustandsmaschine für Kanal A, gesteuert. Die Übertragung Z3 zwischen Botschaftsspeicher 300 und Pufferspeicher 205 wird durch den Zustandsautomaten TBF2-FSM, also 503 gesteuert. Auch hier erfolgt der Datentransfer über Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler kontrollierten Speicherkomponenten dargestellt. Um die Datenintegrität der im Botschafisspeicher gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

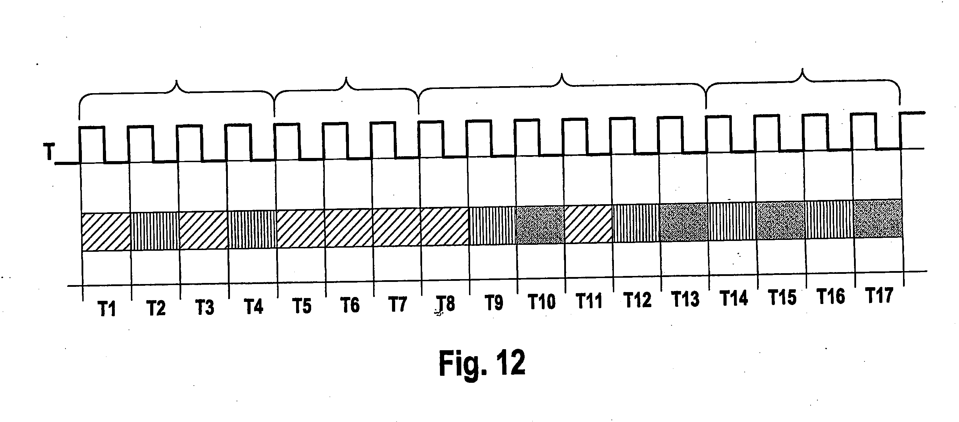

In Abbildung 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 erfolgen Zugriffsanforderungen von Zustandsautomat 501 und Zustandsautomat 502, d.h., dass die gesamte Zeit jeweils zur Hälfte auf die beiden anfordernden Zustandautomaten aufgeteilt wird. Bezogen auf die Taktperioden in Phase 1 bedeutet dies, dass Zustandsautomat 501 in den Taktperioden T1 und T3 Zugriff erhält und Zustandsautomat 502 in den Taktperioden T2 und T4. In Phase 2 erfolgt der Zugriff nur durch die Zustandsmaschine 501, sodass alle drei Taktperioden, also 100% der Zugriffszeit von T5 bis T7 auf IOBF-FSM entfällt. In Phase 3 erfolgen Zugriffsanforderungen aller drei Zustandsautomaten 501 bis 503, sodass eine Drittelung der Gesamtzugriffszeit erfolgt. Der Arbiter AFSM verteilt dann die Zugriffszeit beispielsweise so, dass in den Taktperioden T8 und T11 die Finit-State-Maschine 501, in den Taktperioden T9 und T12 die Finite-State-Maschine 502 und in den Taktperioden T10 und T13 die Finit-State-Maschine 503 Zugriff erhält. In Phase 4 schließlich erfolgt der Zugriff durch zwei Zustandsautomaten, 502 und 503 auf den beiden Kanälen A und B des Kommunikationsbausteins, sodass eine Zugriffsverteilung der Taktperioden T14 und T16 an Finite-State-Machine 502 und in T15 und T17 an Finite-State-Machine 503 erfolgt.

Der Arbiterzustandsautomat AFSM 500 sorgt also dafür, dass für den Fall wenn mehr als eine der drei Zustandsmaschinen eine Anforderung für einen Zugriff auf den Botschaftsspeicher 300 stellt, der Zugriff taktweise und abwechselnd auf die anfordernden Zustandsmaschinen aufgeteilt wird. Diese Vorgehensweise stellt die Integrität der im Botschaftsspeicher abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne das die Zugriffe im Botschaftsobjekt im Botschaftsspeicher selbst kollidieren.

Das beschriebene Verrfahren ermöglicht der Host-CPU im laufenden Betrieb jedes beliebige Botschaftsobjekt im Botschaftsspeicher zu lesen oder zu schreiben, ohne dass das ausgewählte Botschaftsobjekt für die Dauer des Zugriffs der Host-CPU von der Teilnahme am Datenaustausch auf beiden Kanälen des FlexRay Busses gesperrt wäre (Buffer Locking). Gleichzeitig wird durch die taktweise Verschachtelung der Zugriffe die Integrität der im Botschaftsspeicher abgelegten Daten sichergestellt und die Übertragungsgeschwindigkeit, auch durch Ausnutzung der vollen Bandbreite erhöht

## Patentansprüche

1. FlexRay-Kommunikationsbaustein (100) zur Kopplung einer FlexRay-Kommunikationsverbindung (101) mit einem, dem FlexRay-Kommunikationsbaustein zugeordneten Teilnehmer (102) in einem FlexRay-Netzwerk über welches Botschaften übertragen werden, wobei der FlexRay-Kommunikationsbaustein (100) folgende Bestandteile enthält:
- eine erste Anordnung (105) zur Speicherung wenigstens eines Teils der übertragenen Botschaften und
- eine zweite Anordnung (104) zur Verbindung der ersten Anordnung (105) mit dem Teilnehmer (102) sowie
- eine dritte Anordnung (103) zur Verbindung der FlexRay-Kommunikationsverbindung (101) mit der ersten Anordnung (105), **dadurch gekennzeichnet, dass** die zweite Anordnung (104) einen Eingangspufferspeicher (201) und einen Ausgangspufferspeicher (202) enthält.

2. FlexRay-Kommunikationsbaustein (100) nach Anspruch 1, **dadurch gekennzeichnet, dass** die erste Anordnung (105) einen Botschaftsverwalter (200) und einen Botschaftsspeicher (300) enthält.

3. FtexRay-Kommunikationsbaustein (100) nach Anspruch 1, **dadurch gekennzeichnet, dass** die erste Anordnung (105) einen Botschaftsspeicher (300) enthält, wobei der Botschaftsspeicher in ein Kopfsegment (HS) und in ein Datensegment (DS) aufgeteilt ist.

4. FlexRay-Kommunikationsbaustein (100) nach Anspruch 1, **dadurch gekennzeichnet, dass** der Eingangspufferspeicher (202) in einen Teilpufferspeicher (701) und einen Schattenspeicher (700) aufgeteilt ist, wobei der Zugriff auf den Teilpufferspeicher und den Schattenspeicher vertauscht wird.

5. FlexRay-Kommunikationsbaustein (100) nach Anspruch 1, **dadurch gekennzeichnet, dass** der Eingangspufferspeicher (201) in einen Teilpufferspeicher (400) und einen Schattenspeicher (401) aufgeteilt ist, deren inhalt miteinander vertauscht wird.

6. FlexRay-Kommunikationsbaustein (100) nach Anspruch 1, **dadurch gekennzeichnet, dass** der Ausgangspufferspeicher (202) in einen Teilpufferspeicher (701) und einen Schattenspeicher (700) aufgeteilt ist, wobei der Zugriff auf den Teilpufferspeicher und den Schattenspeicher vertauscht wird.

7. FlexRay-Kommunikationsbaustein (100) nach Anspruch 4, **dadurch gekennzeichnet, dass** der Ausgangspufferspeicher (202) in einen Teilpufferspeicher (701) und einen Schattenspeicher (700) aufgeteilt ist, deren Inhalt miteinander vertauscht wird.

8. FlexRay-Kommunikationsbaustein (100) nach einem der Ansprüche 4 bis 7, **dadurch gekennzeichnet, dass** jeder Eingangspufferspeicher (400, 401) und jeder Ausgangspufferspeicher (700, 701) derart ausgelegt ist, dass ein Datenbereich und ein Headerbereich zweier FiexRay-Botschaften speicherbar ist.

9. FlexRay-Kommunikationsbaustein (100) nach Anspruch 1, **dadurch gekennzeichnet, dass** die zweite Anordnung (104) einen Schnittstellenbaustein enthält, der aus einem teilnehmerspezifischen Teilbaustein (204) und einem teilnehmerunabhängigen Teilbaustein (203) besteht.

10. FlexRay-Kommunikationsbaustein (100) nach Anspruch 1, **dadurch gekennzeichnet, dass** die dritte Anordnung (103) einen ersten Schnittstellenbaustein (207) und einen zweiten Schnittstellenbaustein (208) und in zwei Datenpfade mit jeweils zwei Datenrichtungen aufgeteilt ist.

11. FlexRay-Kommunikationsbaustein (100) nach Anspruch 1, **dadurch gekennzeichnet, dass** die dritte Anordnung (103) einen ersten Pufferspeicher (206) und einen zweiten Pufferspeicher (205) enthält und in zwei Datenpfade mit jeweils zwei Datenrichtungen aufgeteilt ist.

12. FlexRay-Kommunikationsbaustein (100) nach Anspruch 11, **dadurch gekennzeichnet, dass** jeder der beiden Pufferspeicher (205, 206) derart ausgelegt sind, dass ein Datenbereich zweier FlexRay-Botschaften speicherbar ist

13. FlexRay-Kommunikationsbaustein (100) nach Anspruch 10, **dadurch gekennzeichnet, dass** jeder der Schnittstellenbausteine (207, 208) ein Schieberegister und eine FlexRay-Protokoll-Zustandsmaschine enthält.

## Claims

1. FlexRay communication chip (100) for coupling a FlexRay communication link (101) to a subscriber (102), associated with the FlexRay communication chip, in a FlexRay network via which messages are transmitted, wherein the FlexRay communication chip (100) contains the following constituent parts:
- a first arrangement (105) for storing at least one portion of the transmitted messages and
- a second arrangement (104) for connecting the first arrangement (105) to the subscriber (102) and also
- a third arrangement (103) for connecting the FlexRay communication link (101) to the first arrangement (105), **characterized in that** the second arrangement (104) contains an input buffer store (201) and an output buffer store (202).

2. FlexRay communication chip (100) according to Claim 1, **characterized in that** the first arrangement (105) contains a message manager (200) and a message memory (300).

3. FlexRay communication chip (100) according to Claim 1, **characterized in that** the first arrangement (105) contains a message memory (300), wherein the message memory is split into a header segment (HS) and a data segment (DS).

4. FlexRay communication chip (100) according to Claim 1, **characterized in that** the input buffer store (202) is split into a buffer store element (701) and a cache (700), wherein the access to the buffer store element and the cache is transposed.

5. FlexRay communication chip (100) according to Claim 1, **characterized in that** the input buffer store (201) is split into a buffer store element (400) and a cache (401), the content of which is transposed with one another.

6. FlexRay communication chip (100) according to Claim 1, **characterized in that** the output buffer store (202) is split into a buffer store element (701) and a cache (700), wherein the access to the buffer store element and the cache is transposed.

7. FlexRay communication chip (100) according to Claim 4, **characterized in that** the output buffer store (202) is split into a buffer store element (701) and a cache (700), the content of which is transposed with one another.

8. FlexRay communication chip (100) according to one of Claims 4 to 7, **characterized in that** each input buffer store (400, 401) and each output buffer store (700, 701) is designed such that a data area and a header area of two FlexRay messages can be stored.

9. FlexRay communication chip (100) according to Claim 1, **characterized in that** the second arrangement (104) contains an interface chip which comprises a subscriber-specific chip element (204) and a subscriber-independent chip element (203).

10. FlexRay communication chip (100) according to Claim 1, **characterized in that** the third arrangement (103) contains a first interface chip (207) and a second interface chip (208) and is split into two data paths with two respective data directions.

11. FlexRay communication chip (100) according to Claim 1, **characterized in that** the third arrangement (103) contains a first buffer store (206) and a second buffer store (205) and is split into two data paths with two respective data directions.

12. FlexRay communication chip (100) according to Claim 11, **characterized in that** each of the two buffer stores (205, 206) is designed such that a data area of two FlexRay messages can be stored.

13. FlexRay communication chip (100) according to Claim 10, **characterized in that** each of the interface chips (207, 208) contains a shift register and a FlexRay protocol state machine.

## Revendications

**1.** Module de communication dit "Flexray" (100) destiné à coupler une liaison de communication FlexRay (101) et un abonné (102) associé au module de communication FlexRay dans un réseau FlexRay par lequel des messages sont échangés, le module de communication FlexRay (100) contenant les composants suivants:
- un premier système (105) de mise en mémoire d'au moins une partie des messages transmis et
- un deuxième système (104) qui assure la liaison entre le premier système (105) et l'abonné (102) ainsi que
- un troisième système (103) qui relie la liaison de communication FlexRay (101) au premier système (105),
**caractérisé en ce que**
le deuxième système (104) contient une mémoire tampon d'entrée (201) et une mémoire tampon de sortie (202).

**2.** Module de communication Flexray (100) selon la revendication 1, **caractérisé en ce que** le premier système (105) contient un gestionnaire de messages (200) et une mémoire à messages (300).

**3.** Module de communication Flexray (100) selon la revendication 1, **caractérisé en ce que** le premier système (105) contient une mémoire à messages (300), la mémoire à messages étant divisée en un segment de tête (HS) et un segment de données (DS).

**4.** Module de communication Flexray (100) selon la revendication 1, **caractérisé en** la mémoire d'entrée (202) est divisée en une mémoire tampon partielle (701) et une mémoire d'écho (700), l'accès à la mémoire tampon partielle et à la mémoire d'écho étant alterné.

**5.** Module de communication Flexray (100) selon la revendication 1, **caractérisé en ce que** la mémoire tampon d'entrée (201) est divisée en une mémoire tampon partielle (400) et une mémoire d'écho (401) qui peuvent échanger leurs contenus.

**6.** Module de communication Flexray (100) selon la revendication 1, **caractérisé en ce que** la mémoire tampon de sortie (202) est divisée en une mémoire tampon partielle (701) et une mémoire d'écho (700), l'accès à mémoire tampon partielle et à la mémoire d'écho étant alterné.

**7.** Module de communication Flexray (100) selon la revendication 4, **caractérisé en ce que** la mémoire tampon de sortie (202) est divisée en une mémoire tampon partielle (701) et une mémoire d'écho (700) qui peuvent échanger leurs contenus.

**8.** Module de communication Flexray (100) selon l'une des revendications 4 à 7, **caractérisé en ce que** chaque mémoire tampon d'entrée (400, 401) et chaque mémoire tampon de sortie (700, 701) sont conçues de manière à pouvoir conserver en mémoire la zone de données et la zone d'en-tête de deux messages FlexRay.

**9.** Module de communication Flexray (100) selon la revendication 1, **caractérisé en ce que** le deuxième système (104) contient un module d'interface qui est constitué d'un module partiel (204) spécifique à l'abonné et d'un module partiel (203) indépendant de l'abonné.

**10.** Module de communication Flexray (100) selon la revendication 1, **caractérisé en ce que** le troisième système (103) contient un premier module d'interface (207) et un deuxième module d'interface (208) et est divisé en deux parcours de données qui présentent chacun deux directions de données.

**10.** Module de communication Flexray (100) selon la revendication 1, **caractérisé en ce que** le système (103) contient une première mémoire tampon (206) et une deuxième mémoire tampon (205) et est divisé en deux parcours de données qui présentent chacun deux directions de données.

**12.** Module de communication Flexray (100) selon la revendication 11, **caractérisé en ce que** chacune des deux mémoires tampons (205, 206) est conçue pour pouvoir conserver la plage de données de deux messages FlexRay.

**13.** Module de communication Flexray (100) selon la revendication 10, **caractérisé en ce que** chacun des modules d'interface (207, 208) contient un registre à décalage et une machine d'état à protocole FlexRay.
